# EUROPEAN PATENT APPLICATION

(11) **EP 0 923 173 A2**
(43) Date of publication of application: **16.06.1999**
(21) Application number: 98309846.8
(22) Date of filing: 01.12.1998
(51) Int. Cl.: H01S 3/07

(54) **Composite fiber amplifier**

(30) Priority: 12.12.1997 US 989280
(71) Applicant: LUCENT TECHNOLOGIES INC., Murray Hill, New Jersey 07974-0636 (US)
(72) Inventor: Hakki, Basil Wahid, Allentown, Pennsylvania 18104 (US)
(74) Representative: Buckley, Christopher Simon Thirsk

(57) **Abstract**

A doped fiber amplifier is formed as a composite structure including relatively small (less than one meter) lengths of different types of fiber amplifier material (S;F) disposed in an alternating pattern. The fiber types that are used exhibit complementary gain characteristics so that the overall composite amplifier will be relatively homogenous and exhibit an essentially flat gain over the operating bandwidth of interest (1530-1560nm).

## Description

### Background of the Invention

### 1. Technical Field

The present invention relates to a doped fiber amplifier structure and, more particularly, to a fiber amplifier comprising a number of discrete sections of different fiber types disposed in a composite form to provide improved gain characteristics.

### 2. Description of the Prior Art

Fiber amplifiers are considered as an essential component of many WDM systems. Dense WDM systems will ultimately have channels spaced approximately 0.8nm apart over a wide wavelength range (1530 - 1560 nm). One problem remaining with conventional erbium-doped fiber amplifiers is their wavelength-dependent gain characteristic. The non-uniform gain causes an imbalance in the optical signal power and the signal-to-noise ratio among the WDM channels.

One prior art solution to the EDFA gain problem was to add aluminum doping to the erbium fiber. This codopant approach was found to improve gain flatness in the wavelength range between 1544 and 1557 nm, but remained ineffective outside of this range. See, for example, the paper entitled "Gain-flattened EDFA with high Al concentration for multistage repeatered WDM transmission systems" by S. Yoshida et al. appearing in Electron Letters, Vol. 31, page 1765 (1995). An alternative approach to the gain non-uniformity problem is discussed in a paper by M. Semenkoff et al entitled "High power, high gain optical fibre amplifier for multiwavelength transmission systems" appearing in Electron Letters Vol. 30, page 1411. Semenkoff et al. describe an arrangement using a two-section fiber amplifier comprising a first section of aluminum-doped EDFA and a second section of fluoride-doped EDFA. Although this hybrid design exhibits improved gain flatness, variations in gain of approximately 1dB between adjacent channels was observed.

### Summary of the Invention

The present invention relates to a doped fiber amplifier structure and, more particularly, to a fiber amplifier comprising a number of discrete sections of different fiber types in a composite form to provide an improved gain characteristic.

In accordance with the present invention, a doped fiber amplifier is formed to comprise several (preferably ten or more) discrete sections of fiber amplifier material chosen from two or more different types of doped fiber amplifier. For example, the aluminum-doped EDFA and fluoride-doped EDFA may be used to form the composite structure of the inventive amplifier. The discrete sections are relatively small and are alternated in placement (aluminum-fluoride-aluminum...) until the desired final fiber amplifier length is achieved. In one embodiment, ten fiber sections may be used, where the combined length of adjacent aluminum and fluoride sections is approximately 1/5 of the length of the final amplifier. Importantly, the ratio of the aluminum/fluoride lengths of the sections is critical for providing the ultimate "homogenous" nature and flat gain of the final amplifier design.

It is an aspect of the present invention to chose fiber amplifier materials with complementary characteristics so that the sections may balance each other and provide the desired uniformity in gain across the entire wavelength range of interest (e.g., 1530 - 1560 nm).

Various other aspects of the present invention will become apparent during the course of the following discussion and by reference to the accompanying drawings.

### Brief Description of the Drawings

Referring now to the drawings,
FIG. 1 illustrates an exemplary composite fiber amplifier formed in accordance with the present invention;
FIGs. 2A and 2B illustrate the emission and absorption spectra, used to determined the gain characteristics, of an exemplary Al-doped EDFA and fluoride-doped EDFA, respectively;
FIG. 3 contains a graph illustrating the gain characteristic for an exemplary composite fiber amplifier, such as the composite fiber amplifier of FIG. 1; and
FIG. 4 illustrates an alternative composite fiber amplifier including three different doped fiber amplifier materials.

### Detailed Description

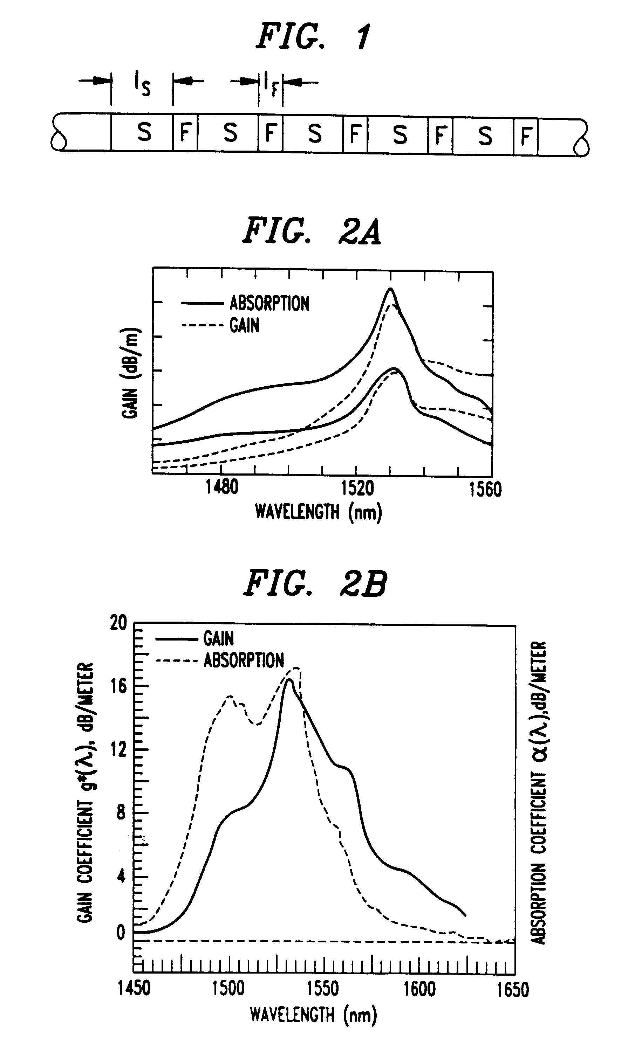

FIG. 1 illustrates an exemplary composite doped fiber amplifier 10 disposed in a communication system (not shown) between a first portion 12 and a second portion 14 of a conventional communication fiber. The particular embodiment illustrated in FIG. 1 includes short fiber sections from two different types of fiber amplifier material, were the two types are chosen to exhibit essentially complementary characteristics. In particular, composite fiber amplifier 10 includes a plurality of aluminum-doped silica fiber sections 16 and a plurality of fluoride fiber sections 18, the sections being spliced together in an alternating pattern as illustrated in FIG. 1. The characteristics of aluminum-doped silica fiber are illustrated in FIG. 2A and the characteristics of fluoride fiber are illustrated in FIG. 2B.

FIG. 1 depicts the length l_{f} of each section of fluoride fiber 18 as between less than the length lₛ of each section of aluminum-doped silica fiber 16. The ratio of fiber section lengths, l_{f}/lₛ is chosen to obtain the best gain flatness at the required operating conditions of gain, input power and bandwidth.

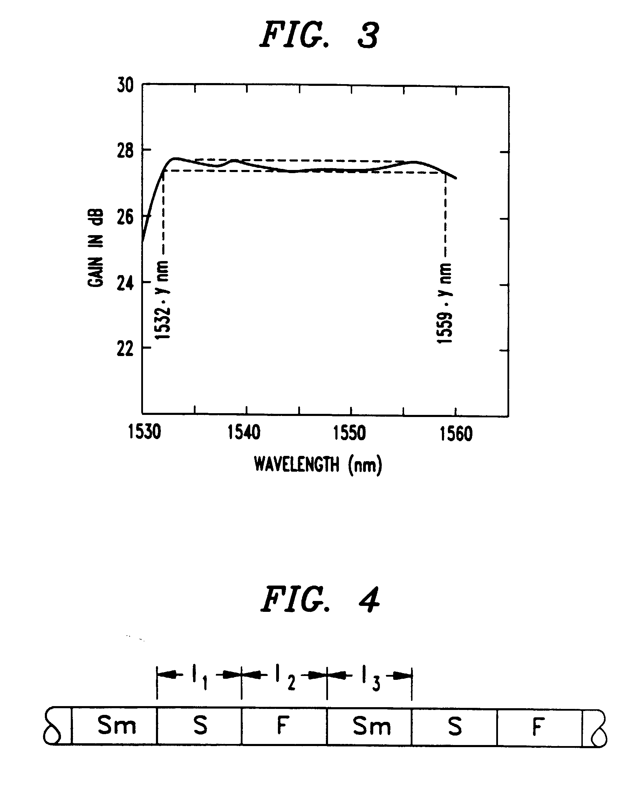

In one particular embodiment, l_{f}/lₛ was chosen to be 0.35. For a composite fiber amplifier of total length 13.4m, pumped at 40mW at 1480nm, the composite gain is shown in FIG. 3. The calculated gain variation for this exemplary composite fiber amplifier is 0.32dB over a wavelength range of 1532 to 1554 nm. This variation is at least a factor of three better than either fluoride or silica-based fibers alone.

Referring to FIG. 3, a small dip in the gain characteristics is noticeable at 1550 nm. This decrease can be compensated for by including a third type of fiber in the composite fiber structure; in particular, a fiber that exhibits increased gain at 1550nm. Samarium-doped or praseodymium-doped fibers are such examples. FIG. 4 illustrates an alternative composite fiber amplifier design that comprises three different types of fiber amplifier material. In this example, the length of a silica section is denoted l₁, the length of a fluoride section is denoted l₂, and the length of a section of samarium-doped fiber is denoted l₃. The total length, l_{T}, of an exemplary portion is therefore l₁+l₂+l₃. As with the above example, the length of each section is determined as a particular fraction of the total length (i.e., l₁/l_{T}=x, l₂/l_{T}=y, and l₃/l_{T}=1-x-y).

In general, the greater the number of sections, the more homogeneous will be the gain characteristic of the amplifier. For example, maintaining each fiber section less than one tenth of the total length is preferred. Various techniques exist for splicing the fiber sections together and are not considered to impact the performance of the amplifier.

## Claims

1. A doped fiber amplifier comprising
a first plurality of fiber sections of a first doped fiber material, said first doped fiber material exhibiting a predefined gain characteristic; and
at least a second plurality of fiber sections of a second doped fiber material, said second doped fiber material exhibiting a different predefined gain characteristic, wherein the doped fiber amplifier is formed by alternating sections of said first doped fiber material and said at least second doped fiber material, the composite of the alternated doped fiber sections forming a doped fiber amplifier with an essentially flat gain characteristic.

2. A doped fiber amplifier as defined in claim 1 wherein the different predefined gain characteristics of the at least second plurality of fiber sections is complementary to the gain characteristic of the first plurality of fiber sections.

3. A doped fiber amplifier as defined in claim 1 wherein the length of each section forming the first plurality is essentially identical and is defined as l₁ and the length of each section forming the second plurality is essentially identical and is defined as l₂, the ratio of l₁/l₂ being controlled to optimize gain flatness.

4. A doped fiber amplifier as defined in claim 3 wherein the first plurality of fiber sections comprises fluoride fiber and the second plurality of fiber sections comprises aluminum-doped silica fiber and l₁/l₂ is approximately 0.35.

5. A doped fiber amplifier as defined in claim 1 wherein the amplifier comprises a second plurality of doped fiber sections and a third plurality of doped fiber sections, the second and third plurality of sections disposed in a sequential pattern with the first plurality of sections.

6. A doped fiber amplifier as defined in claim 5 wherein the third plurality of fiber sections comprise samarium-doped fiber.

7. A doped fiber amplifier as defined in claim 5 wherein the third plurality of fiber sections comprise praseodymium-doped fiber.

8. A doped fiber amplifier as defined in claim 1 wherein the amplifier comprises at least ten sections of concatenated fiber.
